# DEMANDE DE BREVET EUROPEEN

(11) **EP 1 138 698 A1**
(43) Date de publication de la demande: **04.10.2001**
(21) Numéro de dépôt: 01400710.8
(22) Date de dépôt: 19.03.2001
(51) Int. Cl.: C08F 8/26, H01M 4/62, C08F 8/06, C09J 127/22

(54) **Structure comprenant un primaire fluoré et électrode à base de cette structure**

(30) Priorité: 31.03.2000 FR 0004201
(71) Demandeur: Atofina, 92800 Puteaux (FR)
(72) Inventeur: Barriere, Benoit, 27170 Barc (FR); Miyaki, Yoshiyuki, Kyoto Tech. Center, Chudoji, Shimogyo-Ku, Kyoto 600 (JP); Burchill, Michael, Langhorne, PA 19047 (US)
(74) Mandataire: Neel, Henry

(57) **Abrégé**

Le présente invention concerne une structure comprenant successivement une couche d'un métal L1, un primaire fluoré L2 et une couche d'un polymère fluoré L3 dans laquelle le primaire fluoré L2 provient d'un polymère fluoré modifié chimiquement par une déshydrofluoration partielle suivie d'une oxydation.

Selon une forme particulière la structure de l'invention est une électrode d'une batterie lithium-ion dans laquelle le métal L1 est le collecteur et le polymère fluoré L3, fortement chargé de carbone et/ou d'oxydes, en est la couche électroactive

## Description

### [Domaine de l'invention]

La présente invention concerne une structure comprenant un primaire fluoré et une électrode à base de cette structure. Plus précisément la structure comprend successivement une couche d'un métal, un primaire fluoré et une couche d'un polymère fluoré. La couche de polymère fluoré peut être remplacée par un polymère fluoré fortement chargé de carbone et/ou d'oxydes ainsi elle est une couche électroactive, le polymère fluoré est qualifié dans ce cas de liant, il assure la cohésion de cette couche électroactive. Cette structure comprenant successivement la couche d'un métal, le primaire fluoré et cette couche électroactive constitue une électrode d'une batterie lithium-ion.

### [l'art antérieur]

Dans la réalisation des batteries lithium-ion, la couche électroactive contenant soit des charges d'oxydes mixtes soit des charges de carbones et/ou de graphite, avec d'autres ingrédients pour régler les performances électriques, est réalisée en général par dispersion des charges dans un solvant en présence d'un liant polymérique fluoré. La dispersion ainsi obtenue est déposée sur un collecteur métallique par une méthode de "Cast", le solvant est ensuite évaporé pour obtenir une électrode négative ou positive selon les charges utilisées.

Les collecteurs métalliques utilisés sont en général des feuilles ou des grilles de cuivre dans le cas de l'électrode négative et d'aluminium dans le cas de l'électrode positive. Le liant polymérique assure la cohésion de la couche électroactive ainsi que l'adhésion sur le collecteur métallique. Cette cohésion et cette adhésion sont nécessaires pour la bonne réalisation des batteries.

Une mauvaise cohésion de la couche ne permet pas par exemple d'enrouler ou d'empiler les électrodes au sein de la structure multicouche de la batterie sans avoir un effritement préjudiciable du matériau électroactif. Cet inconvénient majeur est produit également lorsque l'adhésion au collecteur est insuffisante.

Les performances de la batterie dépendent étroitement des caractéristiques du liant. Un bon liant permet de réaliser des couches suffisamment chargées en ingrédients électroactifs par rapport à la quantité de liant nécessaire et permet ainsi d'avoir une capacité spécifique élevée. Le liant doit également être stable vis à vis des réactions d'oxydo-réductions lors des cycles de charges et de décharges et doit être également insensible à l'électrolyte présent dans la batterie. Cet électrolyte contient typiquement des solvants de type carbonate comme le carbonate de propylène, d'éthylène, de diméthyle éthyle et un sel de lithium comme LiPF₆ ou LiBF₄.
Le PVDF ou les copolymères du VF₂ sont des matériaux qui possèdent les caractéristiques pour leur utilisation en tant que liants de batterie au lithium.

l'art antérieur WO 97-27260 décrit une structure comprenant successivement (i) un polymère fluoré, (ii) un adhésif constitué d'un mélange de deux polymères choisis parmi le PVDF homopolymère, un polymère acrylique et un copolymère à base de VF2 (fluorure de vinilydène) et (iii) une couche métallique. Il décrit aussi des électrodes de batterie lithium-ion constituées d'une couche électroactive dont le liant est de composition (ii) déposée sur une feuille de cuivre ou d'aluminium.

L'art antérieur WO 97-32347 décrit des électrodes de batterie lithium-ion constituées d'une couche électroactive dont le liant est un polymère fluoré greffé par un polymère acrylique, la dite couche électroactive est déposée sur une feuille de cuivre ou d'aluminium.

### [Le problème technique]

Que ce soit l'adhésion des polymères fluorés sur les métaux ou l'adhésion des couches électroactives à base de polymères fluorés dans les batteries lithium-ion on cherche toujours à améliorer l'adhésion. On a maintenant trouvé qu'un polymère fluoré modifié chimiquement par une déshydrofluoration partielle suivie d'une oxydation pouvait constituer un primaire renforcant l'adhésion :
■ dans une structure comprenant successivement une couche d'un métal, un primaire fluoré et une couche d'un polymère fluoré ou,
■ dans une électrode d'une batterie lithium-ion comprenant successivement une couche d'un métal (le collecteur), le primaire fluoré et la couche électroactive.

L'avantage de l'invention est qu'il n'est plus nécessaire, pour fabriquer la couche électroactive, d'utiliser des polymères fluorés greffés ou des mélanges de polymères fluorés qui sont compliqués à produire. Il suffit d'utiliser des polymères ou des copolymères fluorés ordinaires.

### [Brève description de l'invention]

La présente invention concerne une structure comprenant successivement une couche d'un métal L1, un primaire fluoré L2 et une couche d'un polymère fluoré L3 dans laquelle le primaire fluoré L2 provient d'un polymère fluoré modifié chimiquement par une déshydrofluoration partielle suivie d'une oxydation.

Selon une forme particulière la structure de l'invention est une électrode d'une batterie lithium-ion dans laquelle le métal L1 est le collecteur et le polymère fluoré L3, fortement chargé de carbone et/ou d'oxydes, en est la couche électroactive.

### [Description détaillée de l'invention]

**S'agissant du métal** on peut citer par exemple l'acier, l'acier inoxydable, l'aluminium, le cuivre, le nickel, le titane, le plomb, l'argent, le chrome et leurs différents alliages.

**S'agissant du primaire fluoré L2** il provient d'un polymère fluoré modifié chimiquement par une déshydrofluoration partielle suivie d'une oxydation. Le fluoropolymère qu'on modifie peut être un fluoroplastique ou un fluoroélastomère, dans la mesure où ils contiennent des motifs de formule générale (I): 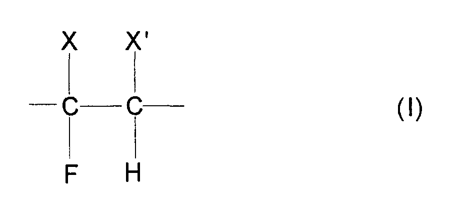 dans laquelle X et X' peuvent être indépendamment l'un de l'autre un atome d'hydrogène, un halogène notamment le fluor ou le chlore, un alkyl perhalogéné notamment perfluoré, afin de rendre le polymère ainsi chimiquement modifié plus adhérant à des substrats métalliques notamment en cuivre ou en aluminium.

Les fluoropolymères utilisables peuvent être préparés par polymérisation ou copolymérisation de monomères insaturés oléfiniques. Pour obtenir un fluoropolymère ayant le motif de la formule (I), le monomère et/ou les comonomères doivent comporter à la fois des atomes de fluor liés à des atomes de carbones et des atomes d'hydrogènes liés à des atomes de carbones. Par exemple les fluoropolymères utilisables peuvent être des homopolymères préparés à partir de monomères hydrofluorocarbonés, ou peuvent être des copolymères dérivant de monomères insaturés perfluorés copolymérisés avec un ou plusieurs monomères insaturés contenant l'hydrogène -H, à savoir un monomère hydrofluorocarboné et/ou un monomère non fluoré.

Comme exemples de monomères insaturés oléfiniques utilisables on peut citer l'hexafluoropropylène (HFP), le tetrafluoroéthylène (TFE), le fluorure de vinylidène (VF₂) le chlorotrifluoroéthylène (CTFE), les 2-chloropentafluoropropène, les éthers vinyliques perfluoroalkyle tels que CF₃--O-CF=CF₂ ou CF₃-CF₂-O-CF=CF₂, le 1-hydropentafluoropropène, le 2-hydropentafluoropropène, le dichlorodifluoroéthylène, le trifluoroéthylène, le 1,1-dichlorofluoroéthylène, et les perfluoro-1,3-dioxoles tels que ceux décrits dans US 4 558 142, et les monomères insaturés oléfiniques ne comportant pas de fluor tels que l'éthylène, le propylène, le butylène et homologues supérieurs.

Les dioléfines contenant du fluor peuvent être utilisées, par exemple les dioléfines telles que l'éther perfluorodiallyle et le perfluoro-1,3-butadiène.

Les monomères ou comonomères insaturés oléfiniques peuvent être polymérisés pour obtenir un fluoropolymère par les procédés connus dans l'état de la technique des fluoropolymères.

En particulier, en ce qui concerne les procédés de synthèse de poly(fluorure de vinylidène) (PVDF), les brevets US 3553185 et EP 0120524 décrivent des procédés de synthèse du PVDF par mise en suspension aqueuse du fluorure de vinylidène (VF₂)et sa polymérisation. Les brevets US 4025709, US 4569978, US 4360652, US 626396 et EP 0655468 décrivent les procédés de synthèse du PVDF par mise en émulsion aqueuse du VF₂ et sa polymérisation.

En général, les monomères fluorés insaturés oléfiniques peuvent être polymérisés et éventuellement copolymérisés avec des monomères oléfiniques non fluorés dans des émulsions aqueuses. Les émulsions contiennent par exemple un amorceur soluble dans l'eau tels qu'un persulfate de métal alcalin ou d'ammonium ou encore un permanganate de métal alcalin, lesquels produisent des radicaux libres, et contiennent également un ou plusieurs émulsifiants tels que les sels de métaux alcalins ou d'ammonium d'un acide perfluorooctanoïque.

D'autres procédés en suspension colloïdales aqueuse utilisent des amorceurs essentiellement solubles dans la phase organique, tels que des peroxydes de dialkyle, des hydroperoxydes d'alkyle, des peroxydicarbonates de dialkyle ou des azoperoxydes, l'amorceur étant associé à des colloïdes du type méthylcelluloses, méthyl-hydroxypropyl celluloses, méthyl-propyl celluloses et méthyl-hydroxyéthyl celluloses.

De nombreux polymères et copolymères fluorés sont commerciaux notamment ceux de la Société ELF ATOCHEM S.A. sous la marque KYNAR® .

De préférence, le polymère fluoré qu'on modifie pour le transformer en L2 est sous la forme d'une dispersion aqueuse, telle qu'une émulsion ou une suspension. Cette dispersion peut être le produit résultant d'une des méthodes de synthèses rappelées ci-dessus.

De préférence le polymère qu'on modifie pour le transformer en L2 est le PVDF homopolymère ou un copolymère VF2-HFP.

On soumet ce polymère fluoré à une déshydrofluoration partielle par une base et on fait réagir ensuite le fluoropolymère ainsi partiellement déshydrofluoré avec un agent oxydant pour donner un nouveau polymère fluoré L2.

Cette déshydrofluoration du polymère fluoré est obtenue par une base en milieux aqueux ou dans un solvant organique. Des bases utilisables sont citées dans WO 98/08880. Elles peuvent être, par exemple, un hydroxyde tel que l'hydroxyde de potassium (KOH), l'hydroxyde d'ammonium (NH₄OH), l'hydroxyde de sodium (NaOH), l'hydroxyde de lithium (LiOH), un carbonate tel que le carbonate de potassium (K₂CO₃)ou le carbonate de sodium (Na₂CO₃), une amine tertiaire, un hydroxyde de tétraalkylammonium, un alcoolate métallique. Un procédé de déshydrofluoration en milieu aqueux d'une émulsion de fluoropolymère est également décrit dans la demande de brevet WO 98/08879. La base peut être mise en oeuvre avec ou sans catalyseur. La base peut être également un dérivé aminé à structure hydrocarbonée soluble ou partiellement soluble dans l'eau ou les solvants organiques, notamment le 1,8-Diazabicyclo[5.4.0]undéc-7-ène (DBU) ou le 1,4-Diazabicyclo[2.2.2]octane (DABCO).

Le catalyseur peut être, par exemple, le bromure de tétrabutylammonium (TBAB), les halogénures de tétraalkylphosphonium, de alkylarylphosphonium, d'alkylammonium et d'alkylphosphonium. Le composé basique et le catalyseur éventuel peuvent être dissous ou dilués dans un solvant tel que le naphtalène, le tétrahydrofuranne (THF) et l'eau.

De préférence, l'oxydation est obtenue par du peroxyde d'hydrogène (H₂O₂) en milieu aqueux hétérogène. En effet, le peroxyde d'hydrogène en phase aqueuse permet d'avoir un procédé avantageux en minimisant les rejets par rapport à un procédé mettant en oeuvre un solvant organique. Le peroxyde d'hydrogène en phase aqueuse permet également un traitement simplifié des effluents par rapport à d'autres agents oxydants. Cependant d'autres agents oxydants, actifs en milieu aqueux, peuvent être utilisés, par exemple, les halogénures de palladium ou de chrome, notamment PdCl₂ et CrCl₂, les permanganates de métaux alcalins, par exemple KMnO₄ les composés peracides, les peroxydes d'alkyle ou les persulfates, éventuellement associés à H₂O₂.

Avantageusement, la réaction ou le contact avec H₂O₂ aqueux est pratiqué à un pH allant de 6,5 à 8 et de préférence de 6,7 à 7,6. En effet, pour un pH inférieur à 6,5 la réaction est très lente et pour un pH supérieur à 8 il y a un risque d'emballement de la réaction de décomposition de H₂O₂.

Avantageusement, la réaction ou le contact avec H₂O₂ est réalisé à une température allant de 20°C à 100°C et mieux de 50°C à 90°C.

Avantageusement la quantité totale de H₂O₂ ajouté, calculée sur la base du peroxyde pur est de 1 à 50% en poids par rapport au poids total du milieu réactionnel. De préférence, cette quantité va de 2 à 12%.

Les polymères modifiés L2 suivant le procédé de la présente invention ont des propriétés d'adhésion et de cohésion fortement augmentées par rapport aux polymères fluorés non chimiquement modifiés. Ces propriétés améliorées permettent de résoudre le problème d'adhésion sur les collecteurs des couches électroactives en polymère fluoré L3 chargées d'oxydes ou de carbone.

Le MFI (abréviation de Melt Flow Index ou indice de fluidité à l'état fondu) de L2 est avantageusement compris 0,2 et 5 g/10min (à 230°C sous une charge de 10 kg) pour L2 derivant du PVDF homopolymère et entre 2 et 10 g/10min (à 230°C sous une charge de 5kg) pour L2 derivant du copolymère de VF2 et d'HFP.

L'épaisseur de la couche de primaire sur le métal L1 peut être comprise entre 1 et 10µm et de préférence 1 et 2 µm pour les électrodes de batteries lithium-ion.

**S'agissant du polymère fluoré L3** il peut être choisi parmi les polymères ou les copolymères contenant des motifs de formule générale (I) citée plus haut pour les polymères qu'on traite pour produire L2.

A titre d'exemple de polymères fluorés L3 on citera tout particulièrement
- les PVDF, homopolymères du fluorure de vinylidène (VF2) et les copolymères du fluorure de vinylidène (VF2) contenant de préférence au moins 50 % en poids de VF2 et au moins un autre monomère fluoré tel que le chlorotrifluoroéthylène (CTFE), l'hexafluoropropylène (HFP), le trifluoroéthylène (VF3), le tétrafluoroéthylène (TFE),
- les homo- et copolymères de trifluoroéthylène (VF3),
- les copolymères, et notamment terpolymères, associant les restes des motifs chlorotrifluoroéthylène (CTFE), tétrafluoroéthylène (TFE), hexafluoropropylène (HFP) et/ou éthylène et éventuellement des motifs VF2 et/ou VF3.

Parmi ces polymères fluorés L3 on utilise avantageusement le PVDF.

Le MVI (MFI en volume) de L3 est avantageusement compris 0,5 et 25 cm3/10min (à 230°C sous une charge de 5 kg).

Selon une forme particulière de l'invention la couche de polymère fluoré L3 peut être fortement chargée de carbone et/ou d'oxydes ainsi elle est une couche électroactive, le polymère fluoré est qualifié dans ce cas de liant, il assure la cohésion de cette couche électroactive. Les couches chargées d'oxydes mixtes de lithium du type LiMₓO_{y} (dans lequel M est un métal de transition comme Mn, Ni, ou Co) ou chargées de carbones de différents types (graphites ou carbones particuliers utilisés en tant que composés d'intercalation des ions lithium) sont utilisées pour la réalisation respectivement des électrodes positives (pour les charges d'oxydes mixtes) et négatives (pour les charges de carbones) dans les batteries lithium-ion.

**Ainsi la présente invention concerne également :**
- Une électrode positive pour batterie lithium-ion selon la structure précédente dans laquelle le métal L1 est de préférence l'aluminium, le primaire fluoré L2 provient d'un polymère fluoré modifié chimiquement par une déshydrofluoration partielle suivie d'une oxydation et la couche de polymère fluoré L3 comportant des particules d'oxydes mixtes est la couche électroactive.
- Une électrode négative pour batterie lithium-ion selon la structure précédente dans laquelle le métal L1 est de préférence le cuivre, le primaire fluoré L2 provient d'un polymère fluoré modifié chimiquement par une déshydrofluoration partielle suivie d'une oxydation et la couche de polymère fluoré L3 comportant des particules de carbone est la couche électroactive.

### [Exemples]

### Exemple 1 : Préparation d'un polyfluorure de vinylidène modifié chimiquement.

Dans cet exemple, on utilise comme produit de départ à titre de polymère fluoré un latex de polyfluorure de vinylidène (PVDF) préparé suivant le procédé en émulsion tel que décrit dans le brevet US 4025709. Ce latex après un séchage à 105°C pendant 24 heures donne une poudre sèche. Cette poudre fondue a une indice de fluidité de 0,6 à 1 g/10 min à 230°C sous 10 kg. Ce latex, dénommé Latex 1 dans la suite, contient 40% en poids de PVDF. Le procédé suivant la présente invention peut cependant être appliqué notamment à tout latex de PVDF ou copolymère de VF2 obtenu par un procédé émulsion ou à toute suspension de PVDF ou copolymère de VF2 obtenu par un procédé suspension.

### • Etape de deshydrofluoration

On commence à préparer dans un réacteur agité de 20 litres 7,2 kg d'une solution aqueuse de soude à 15 % en poids de NaOH dans de l'eau. On porte cette solution à 70°C puis on y ajoute 7,2 kg du Latex 1 éventuellement dilué dans de l'eau désionisée de façon à avoir un extrait sec déterminé, à raison de 0,72 kg/min sous une agitation de 180 tours/min. On obtient alors une émulsion coagulée de couleur marron d'autant plus foncée que la dégradation est avancée. Selon la durée de la réaction de déshydrofluoration, on obtient une fine poudre noire qui devient progressivement insoluble dans les solvants organiques usuels notamment la diméthylformamide (DMF) ou la N-méthylpyrrolidonne (NMP).

### • Etape de mise en réaction avec un agent oxydant

Le milieu réactionnel toujours agité et maintenu à la température de 70°C est acidifié jusqu'à pH = 5 par l'ajout de 2,5 kg environ d'acide chloridrique à 36 % en poids. On ajoute ensuite 1,68 kg de peroxyde d'hydrogène à 35 % en poids à la vitesse de 0,4 kg/min puis on augmente le pH à une valeur comprise entre 6,6 et 7,6 par ajout d'une solution de soude à 15% de NaOH en poids. On laisse réagir en maintenant le pH entre 6,6 et 7,6 par des ajouts de la même solution de soude. On observe une décoloration progressive de l'émulsion coagulée qui devient jaune clair à ocre.

### • Finition

Le coagulat solide en suspension est filtré pour donner une poudre jaune clair qui est lavée par trois dispersions dans 20 litres d'eau sous agitation et filtrations successives. On obtient ainsi une poudre qui est séchée à l'étuve à 105°C à poids constant.

### • Caractérisation

La caractérisation du produit de cette poudre est effectuée en mesurant l'absorbance à 300 nm qui est obtenue par analyse avec un spectrophotomètre PERKIN-ELMER LC-75 en utilisant une concentration de 0,1% en poids de produit dans la NMP. La durée de mise en solution est de 24 heures avant d'effectuer la mesure.

### Exemple 2 : Préparation d'un homopolymère de polyfluorure de vinylidène et de deux copolymères de polyfluorure de vinylidène et d'hexafluorure de propène (HFP) modifiés chimiquement.

Ces essais sont réalisés de manière analogue à celui de l'Exemple 1 dans les conditions expérimentales et avec les résultats analytiques suivants :

| Echantillon | Latex de départ | % massique d'HEP | Indice de fluidité | Extrait sec du latex | Temps de dégradation (min) | Temps du traitement d'oxydation (min) | Absorbance à 300 nm en solution dans la NMP |
|---|---|---|---|---|---|---|---|
| A | Kynar® 50 | 0 | 0,6 - 1 (¹) | 42 % | 30 | 150 | 0,19 |
| B | Kynar® 50 | 0 | 0,6 - 1 (¹) | 42 % | 60 | 150 | 0,206 |
| C | Kynar® 50 | 0 | 0,6 - 1 (¹) | 42 % | 90 | 200 | 0,262 |
| D | Kynarflex® 2800 | 11 | 0,8 - 1 (²) | 11 % | 230 | 75 | 0,154 |
| E | Kynarflex® 2750 | 15 | 3 - 4 (²) | 20 % | 250 | 75 | 0,174 |

| | | | | | | | |
|---|---|---|---|---|---|---|---|
| (¹) g / 10 min à 230°C sous 10 kg | | | | | | | |
| (²) g / 10 min à 230°C sous 5 kg | | | | | | | |

### Exemple 3 : Préparation d'un revêtement de PVDF en épaisseur 1 à 2 µm sur une feuille métallique.

On dissout 3 g de polyfluorure de vinylidène dans 97 g de N-methyl-2-pyrrolidone (abrégé par la suite « NMP » de MERCK, pureté > 99%) sous agitation magnétique à 55°C pendant au moins 30 minutes (jusqu'à 4 h pour les grades qui sont difficiles à dissoudre). Une fois refroidie, on applique cette solution avec un pinceau ou un chiffon sur la feuille métallique (cuivre pour électrode négative ou aluminium pour électrode positive), puis on fait évaporer le solvant à 120°C pendant 10 minutes. L'épaisseur de la couche de PVDF ainsi formée sur le métal varie entre 1 et 2 µm.

### Exemple 4 : Préparation d'un revêtement de PVDF sur une feuille d'aluminium, revêtue ou non d'un primaire.

On dissout 10 g de polyfluorure de vinylidène dans 90 g de NMP sous agitation magnétique à 55°C pendant au moins 30 minutes (jusqu'à 4 h pour les grades qui sont difficiles à dissoudre). Une fois refroidie, cette solution est étalée sur une feuille d'aluminium d'épaisseur 20 µm, revêtue ou non d'un primaire, puis un film est formé au moyen d'une racle manuelle Doctor Blade. Le film est séché à 120°C dans une étuve ventilée pendant 30 minutes. La couche de PVDF ainsi formée sur le métal a une épaisseur d'environ 40 µm.

### Exemple 5 : Préparation d'une solution pour former une électrode négative pour batterie Li-ion.

On dissout 5 g de polyfluorure de vinylidène dans 85 g de NMP sous agitation magnétique à 55°C pendant au moins 30 minutes (jusqu'à 4 h pour les grades qui sont difficiles à dissoudre). On ajoute à cette solution 45 g de poudre de graphite MCMB 6-28 de granulométrie moyenne 6 µm obtenu chez OSAKA GAZ. Ces poudres sont dispersées dans la solution par agitation magnétique à température ambiante pendant 30 minutes, puis pendant 3 minutes dans un disperseur à turbine multipales de marque Dispermat et sous forte agitation (2000 tr/min).

### Exemple 6 : Préparation d'une électrode négative pour batterie Li-ion.

La solution de l'Exemple 5 est étalée sur une feuille de cuivre d'épaisseur 20 µm puis un film est formé au moyen d'une racle manuelle Doctor Blade réglée à 400 µm. Le film est séché à 90°C dans une étuve ventilée pendant 15 minutes, puis à 140°C sous vide pendant une nuit. La couche conductrice ainsi formée sur la feuille de cuivre est ainsi composée de 10 % en poids de polyfluorure de vinylidène et de 90 % de graphite. Sa densité, ou « grammage », est de 1,2 g/cm² environ et son épaisseur de 120 µm en moyenne.

### Exemple 7 : Préparation d'une solution pour former une électrode positive pour batterie Li-ion.

On dissout 3 g de polyfluorure de vinylidène dans 62 g de NMP sous agitation magnétique à 55°C pendant au moins 30 minutes (jusqu'à 4 h pour les grades qui sont difficiles à dissoudre). On ajoute à cette solution 1,5 g de poudre de noir de carbone conducteur de type acéthylène (DENKA Black) et 45,5 g de poudre de LiCoO₂ de granulométrie moyenne 5 µm obtenu chez Union Minière. Ces poudres sont dispersées dans la solution par agitation magnétique à température ambiante pendant 30 minutes, puis pendant 3 minutes dans un disperseur à turbine multipales de marque Dispermat et sous forte agitation (2000 tr/min).

### Exemple 8 : Préparation d'une électrode positive pour batterie Li-ion.

La solution de l'Exemple 7 est étalée sur une feuille d'aluminium d'épaisseur 20 µm puis un film est formé au moyen d'une racle manuelle Doctor Blade réglée à 350 µm. Le film est séché à 90°C dans une étuve ventilée pendant 15 minutes, puis à 140°C sous vide pendant une nuit. La couche conductrice ainsi formée sur la feuille d'aluminium est ainsi composée de 6 % en poids de polyfluorure de vinylidène, de 3 % de noir de carbone conducteur et de 91 % de LiCoO₂. Sa densité, ou « grammage », est de 1,9 g/cm² environ et son épaisseur de 120 µm en moyenne.

### Exemple 9 : Détermination des propriétés d'adhésion entre la couche conductrice et la feuille métallique.

Des bandes de largeur 25 mm et d'au moins 10 cm de longueur sont découpées dans l'assemblage décrit dans l'Exemple 4, dans l'Exemple 6 ou dans l'Exemple 8 puis fixées sur un support métallique rigide par une bande adhésive double face (de marque TESA, référence #4970) de même largeur sur la face couche conductrice. L'assemblage est plaqué au support par simple pression de la main. L'ensemble support métallique rigide + scotch double face + couche conductrice + feuille métallique est appelé « éprouvette de pelage ».

Les éprouvettes de pelage sont ensuite installées sur un dynamomètre DY30 distribué par ADAMEL LHOMARGY. Le support métallique est gardé fixe. La rupture entre la couche conductrice et la feuille d'aluminium est amorcée soit à la main, soit au moyen d'une lame de rasoir. La partie libre de la feuille d'aluminium est fixée à un mord mobile, puis est tiré à 180° avec une vitesse de traction de 100 mm / min. La force de traction instantanée est déterminée par une cellule de force utilisées de 10 N. La valeur moyenne de cette force pendant le pelage entre la feuille métallique et la couche conductrice est appelée « force de pelage ».

### Exemple 10 : Comparaison d'un revêtement de PVDF avec ou sans primaire.

On utilise le Kynar® 761 commercialisé par Elf Atochem pour former un revêtement suivant l'Exemple 4 sur une feuille d'aluminium, revêtue ou non d'un primaire de l'homopolymère PVDF modifié chimiquement « A » de l'Exemple 2 suivant l'Exemple 4. Si la feuille d'aluminium n'est pas revêtue d'un primaire, le Kynar® 761 n'adhére pas sur l'aluminium. Si la feuille d'aluminium est revêtue d'un primaire de l'homopolymère PVDF modifié chimiquement « A » de l'Exemple 2, le Kynar® 761 adhére sur l'aluminium, et en utilisant le procédé décrit dans l'Exemple 9, la force de pelage entre le revêtement de Kynar® 761 et la feuille d'aluminium peut être mesuré à 0,22 N / 25 mm avec un écart-type de 0,06 N / 25 mm.

### Exemple 11 : Comparaison d'une électrode négative avec ou sans primaire.

On utilise le Kynar® 761 commercialisé par Elf Atochem pour former une électrode négative suivant l'Exemple 5 et l'Exemple 6, revêtue ou non d'un primaire des homopolymères PVDF modifié chimiquement « A », « B » et « C » de l'Exemple 2 suivant l'Exemple 4 ou d'un primaire des copolymères PVDF-HFP modifié chimiquement « D » et « E » de l'Exemple 2 suivant l'Exemple 4. On utilise également l'homopolymère PVDF modifié chimiquement « A » de l'Exemple 2 ou l'homopolymère PVDF KF-1300 de KUREHA (« standard» du marché) pour former une électrode négative suivant l'Exemple 5 et l'Exemple 6 et les comparer aux précédentes. En utilisant le procédé décrit dans l'Exemple 9, la force de pelage entre la couche conductrice et la feuille d'aluminium peut être mesurée, et les résultats sont rassemblés dans le tableau suivant :

| Liant utilisé | Primaire | Force de pelage (g / 25 mm) |
|---|---|---|
| Kynar® 761 | non | 55 |
| Kynal® 761 | A | 110 |
| Kynar® 761 | B | 200 |
| Kynar® 761 | C | 200 |
| Kynar® 761 | D | 170 |
| Kynar® 761 | E | 200 |
| A | non | 220 |
| KF-1300 | non | 140 |

Ainsi, un homopolymère de PVDF qui est un liant de moyenne qualité, comme le Kynar® 761, peut être utilisé dans la fabrication d'une électrode négative conjointement à un primaire d'un homopolymère PVDF modifié chimiquement ou d'un copolymère PVDF-HFP modifié chimiquement pour former une électrode de bonne qualité, comme en témoigne la comparaison avec les électrodes fabriquées avec le KF-1300 ou l'homopolymère PVDF modifié chimiquement « A ».

### Exemple 12 : Comparaison d'une électrode positive avec ou sans primaire.

On utilise le Kynar® 761 commercialisé par Elf Atochem pour former une électrode positive suivant l'Exemple 7 et l'Exemple 8, revêtue ou non d'un primaire des homopolymères PVDF modifié chimiquement « A », « B » et « C » de l'Exemple 2 suivant l'Exemple 4. On utilise également l'homopolymère PVDF modifié chimiquement « A » de l'Exemple 2 ou l'homopolymère PVDF KF-1300 de KUREHA (« standard » du marché) pour former une électrode négative suivant l'Exemple 7 et l'Exemple 8 et les comparer aux précédentes. En utilisant le procédé décrit dans l'Exemple 9, la force de pelage entre la couche conductrice et la feuille d'aluminium peut être mesurée, et les résultats sont rassemblés dans le tableau suivant :

| Liant utilisé | Primaire | Force de pelage (g / 25 mm) |
|---|---|---|
| Kynar® 761 | non | 25 |
| Kynar® 761 | A | 430 |
| Kynar® 761 | B | 450 |
| Kynar® 761 | C | 400 |
| A | non | 340 |
| KF-1300 | non | 60 |

Ainsi, un homopolymère de PVDF qui est un liant de moyenne qualité, comme le Kynar® 761, peut être utilisé dans la fabrication d'une électrode positive conjointement à un primaire d'un homopolymère PVDF modifié chimiquement pour former une électrode de bonne qualité, comme en témoigne la comparaison avec les électrodes fabriquées avec le KF-1300 ou l'homopolymère PVDF modifié chimiquement « A ».

## Revendications

1. Structure comprenant successivement une couche d'un métal L1, un primaire fluoré L2 et une couche d'un polymère fluoré L3 dans laquelle le primaire fluoré L2 provient d'un polymère fluoré modifié chimiquement par une déshydrofluoration partielle suivie d'une oxydation.

2. Structure selon la revendication 1 dans laquelle le polymère à modifier chimiquement contient des motifs de formule générale (I) : 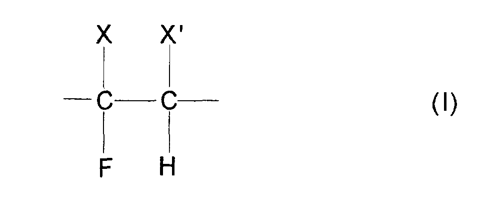 dans laquelle X et X' peuvent être indépendamment l'un de l'autre un atome d'hydrogène, un halogène notamment le fluor ou le chlore, un alkyl perhalogéné notamment perfluoré.

3. Structure selon la revendication 2 dans laquelle le polymère à modifier chimiquement est le PVDF homopolymère ou un copolymère VF2-HFP.

4. Electrode d'une batterie lithium-ion ayant la structure de l'une quelconque des revendications précédentes dans laquelle le métal L1 est le collecteur et le polymère fluoré L3, fortement chargé de carbone et/ou d'oxydes, en est la couche électroactive.

5. Electrode positive pour batterie lithium-ion selon la revendication 4 dans laquelle le métal L1 est de préférence l'aluminium, le primaire fluoré L2 provient d'un polymère fluoré modifié chimiquement par une déshydrofluoration partielle suivie d'une oxydation et la couche de polymère fluoré L3 comportant des particules d'oxydes mixtes est la couche électroactive.

6. Electrode négative pour batterie lithium-ion selon la revendication 4 dans laquelle le métal L1 est de préférence le cuivre, le primaire fluoré L2 provient d'un polymère fluoré modifié chimiquement par une déshydrofluoration partielle suivie d'une oxydation et la couche de polymère fluoré L3 comportant des particules de carbone est la couche électroactive.
